(19) Europäisches Patentamt
European Patent Office
Office européen des brevets

(11) **EP 4 636 461 A1**

(12) **EUROPEAN PATENT APPLICATION**
published in accordance with Art. 153(4) EPC

(43) Date of publication:
**22.10.2025 Bulletin 2025/43**

(21) Application number: **24750567.0**

(22) Date of filing: **31.01.2024**

(51) International Patent Classification (IPC):
**G02B 27/01** (2006.01)     **G02F 1/163** (2006.01)
**G02C 5/00** (2006.01)      **G02C 5/22** (2006.01)
**G06F 1/16** (2006.01)

(52) Cooperative Patent Classification (CPC):
**G02B 27/01; G02C 5/00; G02C 5/22; G02F 1/163;
G06F 1/16**

(86) International application number:
**PCT/KR2024/001485**

(87) International publication number:
**WO 2024/162770 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.02.2023 KR 20230015147
22.02.2023 KR 20230023684**

(71) Applicant: **Samsung Electronics Co., Ltd.
Suwon-si, Gyeonggi-do 16677 (KR)**

(72) Inventor: **SHIN, Wonho
Suwon-si Gyeonggi-do 16677 (KR)**

(74) Representative: **Appleyard Lees IP LLP
15 Clare Road
Halifax HX1 2HY (GB)**

(54) **AUGMENTED REALITY WEARABLE ELECTRONIC DEVICE**

(57)     A wearable electronic device according to one embodiment of the present invention may comprise: a body portion having a glass mounting part, a temple member and a hinge rotatably connecting the temple member to the body portion, The hinge may comprise a hinge housing which is rotatably connected to the body portion through a first shaft and rotatably connected to the temple member through a second shaft. The hinge may comprise a first pulley which is fixed to the body portion and through which the first shaft passes. The hinge may comprise a second pulley which is fixed to the temple member and through which the second shaft passes. The hinge may comprise a first wire surrounding at least a portion of each of the first pulley and the second pulley.

*FIG.1*

## Description

### [Technical Field]

Embodiments of the disclosure relate to a wearable electronic device capable of adjusting the width of a temple member.

### [Background Art]

Various types of wearable devices are being developed to offer diverse usage experiences that cater to different user needs, thereby enhancing the utility value of electronic devices. The wearable device may refer to an electronic device capable of being worn/detached on/from the user's body or clothing. The wearable device may take various forms, including, for example, a T-shirt, glasses, bracelets, watches, or shoes. Recently, there has been a significant increase in the use of smart watches, which may be worn on the user's wrist, and wearable devices in the form of head mounted devices (HMD), which may be worn on the user's head.

Through the application of virtual reality (VR), augmented reality (AR), or mixed reality (MR) technology, HMD may offer users an immersive experience where digitally recreated images are perceived as objects within a real physical environment. An example of an HMD may be smart glasses designed in the shape of regular glasses. The smart glasses may provide, e.g., a real screen that has passed through the glass and a virtual screen generated and projected by the display to the user.

Since wearable devices should be worn and used by the user, the user's wearing stability may be a major factor in determining device performance and convenience. In particular, for head-mounted displays that the user wears and views projected images from, the reliability with which these devices may be worn on the user's body significantly impacts the user's experience.

### [Disclosure of Invention]

### [Technical Problem]

A wearable electronic device (e.g., smart glasses) according to various embodiments of the disclosure may include a device body portion (e.g., a lens frame) and separate body wearing members (e.g., a pair of temple members) that allow users of different body sizes to freely wear the device according to the body size (e.g., head size). In the wearable electronic device according to various embodiments of the disclosure, the width of the device, e.g., the width between a pair of body wearing members (e.g., the temple members) may be adjusted according to the body size for each user by the user's manipulation.

In the wearable electronic device according to various embodiments of the disclosure, even when the width of the device is adjusted by the body wearing members (e.g., the temple members) of the device, the angle formed by the body wearing members (e.g., the temple members) with respect to the body portion may be maintained constant.

In the wearable electronic device according to various embodiments of the disclosure, even when the width of the device is adjusted by the body wearing members (e.g., the temple members) of the device, the force (e.g., rotational torque) acting on the body portion from the body wearing members (or the hinge connecting the body portion to the body wearing members) or the elasticity felt by the device wearer may be maintained constant.

A wearable electronic device according to an embodiment of the disclosure may comprise a body portion having a glass mounting portion, a temple member, and a hinge rotatably connecting the temple member to the body portion. The hinge may include a hinge housing rotatably connected to the body portion through a first shaft and rotatably connected to the temple member through a second shaft. The hinge may include a first pulley fixed to the body portion and allowing the first shaft to pass therethrough. The hinge may include a second pulley fixed to the temple member and allowing the second shaft to pass therethrough. The hinge may include a first wire surrounding at least a portion of each of the first pulley and the second pulley.

In various embodiments of the disclosure, when the width between both the temple members is adjusted, the temple member is rotated at substantially the same angle in the direction opposite to the rotation direction of the hinge in response to the rotation of the hinge, maintaining the angle between the temple member and the body portion constant before and after the rotation. As a result, when adjusting the width between the temple members, the angle between both the temple members may be maintained constant, thereby providing the user with the same wearing comfort irrespective of the user's body size.

Various embodiments of the disclosure may enable the temple members to generate the same clamping force even when the width between the temple members changes due to the mutual movement of the rotation cam and the fixed cam and the elastic force of the springs during the adjustment of the width between the temple members. As a result, the same clamping force acts on the temple members when adjusting the width between the temple members, providing the user with the same wearing comfort irrespective of the user's body size.

In various embodiments of the disclosure, the flexible printed circuit board (FPCB) is disposed to pass through the shaft of the hinge, thereby securing a space for disposing a plurality of electrical components inside the body portion and the temple members.

Effects of the present invention are not limited to the foregoing, and other unmentioned effects would be apparent to one of ordinary skill in the art from the following description. In other words, unintended effects in practicing embodiments of the disclosure may also be derived by one of ordinary skill in the art from example embodiments of the disclosure.

[Brief Description of the Drawings]

In connection with the description of the drawings, the same or similar reference numerals may be used to denote the same or similar elements.

FIG. 1 is a perspective view illustrating a wearable electronic device according to an embodiment;
FIG. 2 is a plan view and a side view illustrating a wearable electronic device according to an embodiment;
FIG. 3 is a partially exploded perspective view illustrating an exemplary connection relationship between a body portion, a temple member, and a hinge of the wearable electronic device of FIG. 1;
FIG. 4 is a partially exploded perspective view illustrating a state before a first pulley is mounted on a first pulley fixing portion of a body portion of the wearable electronic device of FIG. 1;
FIG. 5 is a schematic view illustrating an operation relationship between a hinge and a temple member to maintain a constant angle formed by a straight portion of the temple member with respect to a body portion when adjusting the width between the temple members in a wearable electronic device according to an embodiment;
FIG. 6 is a schematic view illustrating an operation relationship between a hinge and a temple member to maintain a constant angle formed by a straight portion of the temple member with respect to a body portion when adjusting the width between the temple members in a wearable electronic device according to an embodiment;
FIG. 7 is a plan view illustrating a wearable electronic device showing a state before and after adjusting the width between temple members in the wearable electronic device according to an embodiment;
FIG. 8 is a schematic view illustrating a rotational force maintaining part for maintaining a rotational force of a hinge acting on a body portion in a wearable electronic device according to an embodiment;
FIG. 9 is a view illustrating a stopper structure limiting a rotation angle of a hinge housing according to an embodiment;
FIG. 10 is a schematic view illustrating the shape of a rotation cam of a hinge housing according to an embodiment;
FIG. 11 is a schematic view illustrating the operation of a rotational force maintaining part according to an embodiment;
FIG. 12 is a perspective view illustrating a partial internal configuration of a wearable electronic device according to an embodiment; and

FIG. 13 is a cross-section taken along line A-A of FIG. 2.

[Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

In various embodiments, the wearable electronic device may be provided in a form that may be worn on a portion of the user's body, such as the head. For example, the wearable electronic device may be implemented in the form of glasses, but the disclosure is not limited thereto. The wearable electronic device 100 may be configured to provide an image and/or video related to an augmented reality (AR) service to the user.

Hereinafter, for convenience of description, a wearable electronic device according to an embodiment of the disclosure is described as a wearable electronic device in the form of glasses, and a detailed description of general components of the wearable electronic device for implementing augmented reality is omitted.

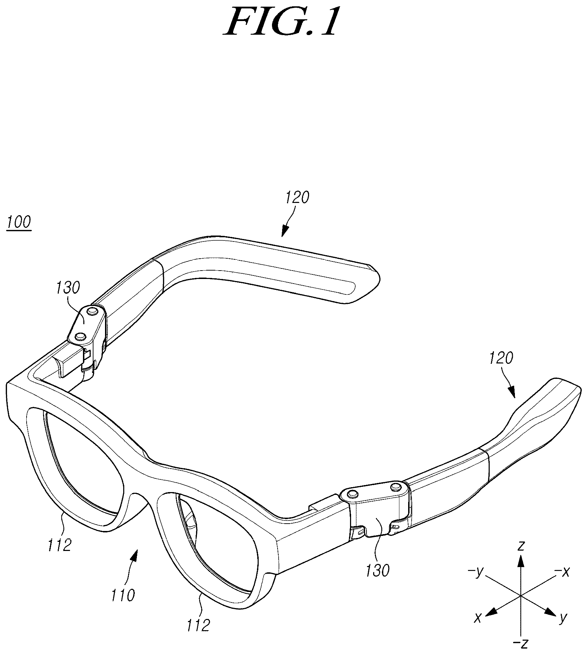

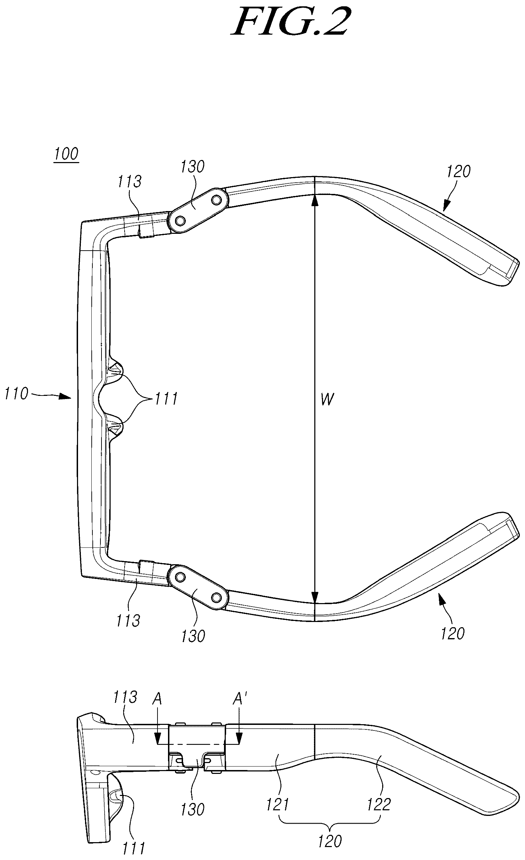

FIG. 1 is a perspective view illustrating a wearable electronic device according to an embodiment. FIG. 2 is a plan view and a side view illustrating a wearable electronic device according to an embodiment.

Referring to FIGS. 1 and 2, the wearable electronic device 100 according to an embodiment may include a body portion 110, a temple member 120, and a hinge 130.

According to an embodiment, a nose support 111 seated on the user's nose when the wearable electronic device 100 is worn may be provided at the center of the body portion 110.

According to an embodiment, the body portion 110 may include a glass mounting portion 112 in which a glass (not illustrated) corresponding to each of the user's eyes (e.g., the left or right eye) is mounted when the user wears the wearable electronic device 100. Although not specifically illustrated, the user wearing the wearable electronic device 100 may receive information related to an object in reality and the object by augmented reality technology through the glass (not illustrated) mounted on the glass mounting portion 112.

According to an embodiment, the body portion 110 may include a connection portion 113 extending from the glass mounting portion 112 in a direction (e.g., -x-axis direction) substantially perpendicular to the body portion 110. In an embodiment, the connection portion 113 of the body portion 110 may be connected to the temple member 120 through the hinge 130. In an embodiment, the connection portion 113 may be disposed on each of two opposite ends of the glass mounting portion 112.

According to an embodiment, the temple member 120 may be rotatably connected to the body portion 110 through the hinge 130. For example, the temple member 120 may be rotatably connected to the body portion 110, specifically to the connection portion 113 of the body portion 110, through the hinge 130, and may rotate inward (e.g., closer to the wearer's head) or outward (e.g., away from the wearer's head). According to an embodiment, as illustrated, each temple member 120 may be connected to each of the side connection portions 113 provided on the body portion 110 through each hinge 130.

According to an embodiment, the temple member 120 may be provided in a shape that may be hung over the user's ear. For example, the temple member 120 may include a straight portion 121 extending in a substantially straight line with the connection portion 113 along a direction (e.g., -x-axis direction) substantially perpendicular to the body portion 110, and a curved portion 122 extending obliquely in the lower direction (e.g., -z direction) from the straight portion 121. In this case, when the user wears the wearable electronic device 100, the curved portion 122 of the temple member 120 is disposed to surround the user's ear to provide a stable fit to the user.

In an embodiment, the temple members 120 may include a first temple member mounted on the user's right ear and a second temple member mounted on the user's left ear. In an embodiment, the first temple member and the second temple member may be disposed to correspond to each other with respect to the body portion 110.

According to an embodiment, the hinge 130 may be disposed between the body portion 110 and the temple member 120. In an embodiment, the hinge 130 may be rotatably connected to the body portion 110 and/or the temple member 120. In an embodiment, the hinge 130 may be configured to adjust the width W (e.g., the longest distance between both the temple members 120) between both the temple members 120 according to the user's body size. Hereinafter, the detailed structure, shape, and/or function of the hinge 130 is described below.

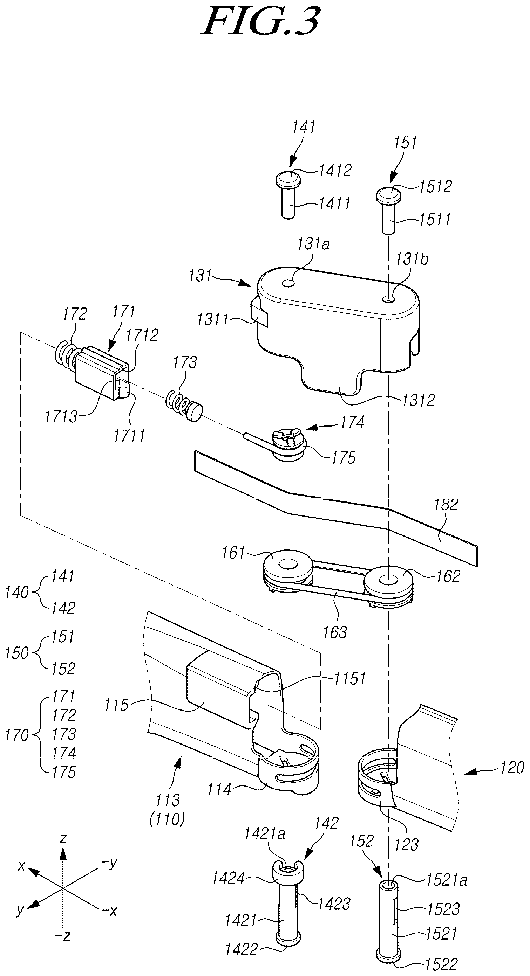

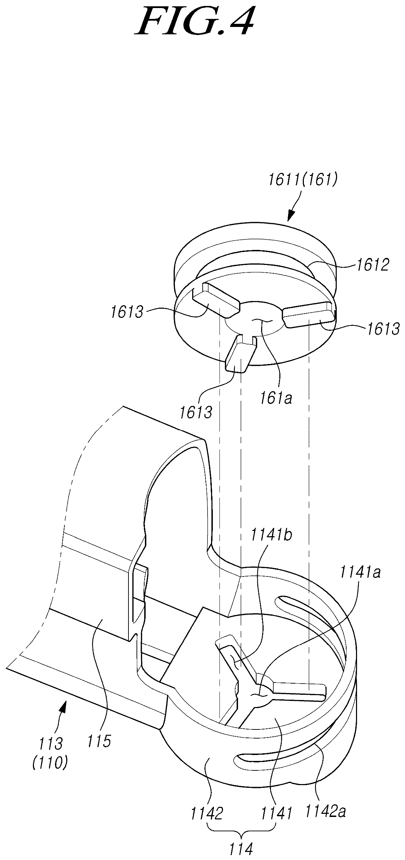

FIG. 3 is a partially exploded perspective view illustrating a connection relationship between a body portion, a temple member, and a hinge of the wearable electronic device of FIG. 1. FIG. 4 is a partially exploded perspective view illustrating a state before a first pulley is mounted on a first pulley fixing portion of a body portion of the wearable electronic device of FIG. 1.

According to an embodiment, the hinge 130 may include a hinge housing 131, a first pin 140, a second pin 150, a first pulley 161, a second pulley 162, and a first wire 163. According to an embodiment, the hinge 130 may include at least a portion of a third pulley 174 and an FPCB 182.

According to an embodiment, as illustrated in FIGS. 3 and 4, the hinge 130 may be rotatably connected to the body portion 110 through the first pin 140. According to an embodiment, the hinge 130 may be rotatably connected to the temple member 120 through the second pin 150.

According to an embodiment, the hinge housing 131 may be provided to have a substantially elliptical column shape. In an embodiment, the hinge housing 131 may be configured to receive several components (e.g., the first pulley 161, the second pulley 162, the first wire 163, the third pulley 174, and the FPCB 182) of the wearable electronic device 100.

According to an embodiment, a pair of pin holes 131a and 131b may be disposed in an upper surface of the hinge housing 131. In an embodiment, the pin holes 131a and 131b may include a first pin hole 131a through which the first pin 140 (specifically, a first upper pin 141 described below) passes and a second pin hole 131b through which the second pin 150 (specifically, a second upper pin 151 described below) passes. In an embodiment, the first pin hole 131a may be disposed adjacent to the body portion 110 in the upper surface of the hinge housing 131. In an embodiment, the second pin hole 131b may be disposed adjacent to the temple member 120 in the upper surface of the hinge housing 131.

According to an embodiment, a cover portion 1312 extending in the lower direction may be provided on each of two opposite sides of the hinge housing 131 (e.g., one side surface of the hinge housing 131 facing the user's head when the user wears the wearable electronic device 100, and its opposite side surface). For example, the cover portion 1312 may have a width smaller than that of a long side of the hinge housing 131 and may extend in the lower direction. In this case, the hinge housing 131 may rotate while avoiding interference with the first pulley fixing portion 114 and the second pulley fixing portion 123 described below. Further, since the cover portion 1312 surrounds at least a portion of the first wire 163, the first wire 163 may be protected from the outside.

According to an embodiment, one side portion of the hinge housing 131 (e.g., one side surface of the hinge housing 131 facing the body portion 110) may be provided with a rotation cam 1311 that contacts and mutually moves with the fixed cam 1711 of the spring housing 171 described below. In an embodiment, the rotation cam 1311 may protrude from the one side portion of the hinge housing 131. The specific shape of the rotation cam 1311 and the mutual movement between the rotation cam 1311 and the fixed cam 1711 are described below.

According to an embodiment, the first pin 140 may be disposed to pass through the hinge housing 131, the first pulley 161 inside the hinge housing 131, and the first pulley fixing portion 114 on the side of the body portion 110. In an embodiment, the first pin 140 may form a first rotation axis allowing the hinge 130 to rotate with

According to an embodiment, the first pin 140 may include a first upper pin 141 and a first lower pin 142.

According to an embodiment, the first upper pin 141 may form an upper portion of the first pin 140. In an embodiment, the first upper pin 141 may include a first upper body 1411 extending in a vertical direction, and a first upper head 1412 extending in a radial direction perpendicular to the vertically extending direction of the first upper body 1411 from an upper end of the first upper body 1411.

According to an embodiment, the first upper body 1411 may have a substantially cylindrical shape. In an embodiment, the diameter of the first upper body 1411 may be designed to be substantially the same as or smaller than the diameter of the pin hole 131a.

According to an embodiment, the first upper head 1412 may have a substantially disc shape. In an embodiment, the diameter of the first upper head 1412 may be designed to be larger than the diameter of the pin hole 131a of the hinge housing 131. In this case, when the first pin 140 (specifically, the first upper pin 141) is inserted into the hinge housing 131, the first pin 140 (specifically, the first upper pin 141) may be prevented from being separated in the lower direction as the first upper head 1412 is stuck to the upper surface of the hinge housing 131.

According to an embodiment, the first lower pin 142 may form a lower portion of the first pin 140. In an embodiment, the first lower pin 142 may include a first lower body 1421 extending in a vertical direction, and a first lower head 1422 extending in a radial direction perpendicular to the vertically extending direction of the first lower body 1421 from a lower end of the first lower body 1421.

According to an embodiment, the first lower body 1421 may have a substantially cylindrical shape. In an embodiment, the diameter of the first lower body 1421 may be designed to be larger than the diameter of the first upper body 1411.

According to an embodiment, the first pin recess 1421a recessed in the lower direction may be provided in the upper surface of the first lower body 1421. In this case, as the first upper body 1411 of the first upper pin 141 is inserted into the first pin recess 1421a, the first upper pin 141 and the first lower pin 142 may be integrally coupled.

According to an embodiment, a first wire hole 1423 provided to allow the FPCB 182 to pass may be disposed in a side portion of the first lower body 1421.

According to an embodiment, the first lower head 1422 may have a substantially disc shape. In an embodiment, the diameter of the first lower head 1422 may be designed to be larger than the diameter of the pin hole 1141a of the first pulley fixing portion 114 described below. In this case, when the first pin 140 (specifically, the first lower pin 142) is inserted into the first pulley fixing portion 114, the first pin 140 (specifically, the first lower pin 142) may be prevented from being separated in the upper direction as the first lower head 1422 is stuck to the lower surface of the first pulley fixing portion 114.

According to an embodiment, the second pin 150 may be provided to pass through the hinge housing 131, the second pulley 162 inside the hinge housing 131, and the second pulley fixing portion 123 on the side of the temple member 120. In an embodiment, the second pin 150 may form a second rotation axis allowing the hinge 130 and the temple member 120 to rotate with respect to each other.

According to an embodiment, the second pin 150 may include a second upper pin 151 and a second lower pin 152.

According to an embodiment, the second upper pin 151 may form an upper portion of the second pin 150. In an embodiment, the second upper pin 151 may include a second upper body 1511 extending in the vertical direction, and a second upper head 1512 extending in a radial direction perpendicular to the vertically extending direction of the second upper body 1511 from the upper end of the second upper body 1511.

According to an embodiment, the second upper body 1511 may have a substantially cylindrical shape. In an embodiment, the diameter of the second upper body 1511 may be designed to be equal to or smaller than the diameter of the pin hole 131b.

According to an embodiment, the second upper head 1512 may have a substantially disc shape. In an embodiment, the diameter of the second upper head 1512 may be designed to be larger than the diameter of the pin hole 131b of the hinge housing 131. In this case, when the second pin 150 (specifically, the second upper pin 151) is inserted into the hinge housing 131, the second pin 150 (specifically, the second upper pin 151) may be prevented from being separated in the lower direction as the second upper head 1512 is stuck to the upper surface of the hinge housing 131.

According to an embodiment, the second lower pin 152 may form a lower portion of the second pin 150. In an embodiment, the second lower pin 152 may include a second lower body 1521 extending in the vertical direction, and a second lower head 1522 extending in the radial direction perpendicular to the vertically extending direction of the second lower body 1521 from the lower end of the second lower body 1521.

According to an embodiment, the second lower body 1521 may have a substantially cylindrical shape. In an embodiment, the diameter of the second lower body 1521 may be designed to be larger than the diameter of the second upper body 1511.

According to an embodiment, the second pin recess 1521a recessed in the lower direction may be provided in the upper surface of the second lower body 1521. As the second upper body 1511 of the second upper pin 151 is inserted into the second pin recess 1521a, the second upper pin 151 and the second lower pin 152 may be integrally coupled.

According to an embodiment, a second wire hole 1523 provided to allow the FPCB 182 to pass may be disposed in a side portion of the second lower body 1521.

According to an embodiment, the second lower head 1522 may have a substantially disc shape. In an embodiment, the diameter of the second lower head 1522 may be designed to be larger than the diameter of a pin hole (not illustrated) of the second pulley fixing portion 123 described below. In this case, when the second pin 150 (specifically, the second lower pin 151) is coupled to the second pulley fixing portion 123, the second pin 150 (specifically, the second lower pin 151) may be prevented from being separated in the upper direction as the second lower head 1522 is stuck to the lower surface of the second pulley fixing portion 123.

According to an embodiment, the first pulley 161 may be disposed to be fixed to the connection portion 113 of the body portion 110. For example, the first pulley 161 may be fixed to the connection portion 113 of the body portion 110 as it is mounted on the first pulley fixing portion 114 described below.

According to an embodiment, the first pulley 161 may include a first pulley body 1611 extending in the vertical direction, and a wire recess 1612 recessed radially inward from the outer circumference of the first pulley body 1611.

According to an embodiment, the first pulley 161 may include a pin hole 161a provided to pass through the center of the first pulley body 1611. The body portion 110 and the hinge 130 may interlock with each other as the first pin 140 is inserted into the pin hole 161a.

According to an embodiment, the first pulley 161 may include at least one fixing protrusion 1613 protruding from the lower surface of the first pulley 161. In an embodiment, the fixing protrusion 1613 may extend from the edge of the pin hole 161a to the lower edge of the first pulley 161, but the disclosure is not limited thereto. In an embodiment, at least one fixing protrusion 1613 may be disposed to be spaced apart by a predetermined distance along the circumference of the pin hole 161a on the lower surface of the first pulley 161.

According to an embodiment, the second pulley 162 may be disposed to be fixed to the temple member 120. For example, the second pulley 162 may be fixed to the temple member 120 as it is mounted on the second pulley fixing portion 123 described below. Compared with the above-described first pulley 161, the second pulley 162 may be configured substantially the same in terms of structure, shape, and function. In this case, for convenience of description, the description of the first pulley 161 may be equally applied to the second pulley 162.

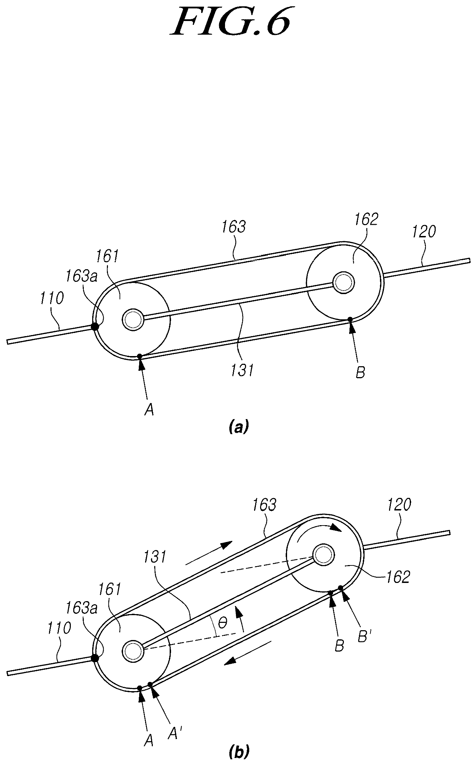

According to an embodiment, the first wire 163 may be disposed to surround the first pulley 161 and the second pulley 162. For example, the first wire 163 may be provided in a closed loop shape. In an embodiment, the first wire 163 may be disposed to tightly contact the first pulley 161 and the second pulley 162. In an embodiment, one end (e.g., 163a of FIG. 6) of the first wire 163 may be fixed to the first pulley 161. In an embodiment, the other end of the first wire 163 may surround at least a portion of the first pulley 161 or the second pulley 162. In an embodiment, the first wire 163, the first pulley 161, and the second pulley 162 may be provided in sawtooth structures formed to be engaged with each other. For example, a sawtooth structure may be provided on the inner circumferential surface of the first wire 163, and a recess structure corresponding to the sawtooth structure of the first wire 163 may be provided on the outer circumferential surface of each of the first and second pulleys 161 and 162. In this case, the sawtooth structure may prevent the wire from slipping, allowing the wire to be properly aligned with the pulley to maintain tension. In this case, the first wire 163 may be referred to as a first timing belt, and the first and second pulleys 161 and 162 may be referred to as a first timing pulley and a second timing pulley, respectively.

According to an embodiment, a first pulley fixing portion 114 for fixing the first pulley 161 may be disposed at an end of the connection portion 113 of the body portion 110. In an embodiment, the first pulley fixing portion 114 may be positioned at a lower end of the connection portion 113.

According to an embodiment, the first pulley fixing portion 114 may be configured to receive the first pulley 161 therein. In an embodiment, the first pulley fixing portion 114 may include a bottom portion 1141, and a side wall 1142 extending in the upper direction from the edge of the bottom portion 1141.

According to an embodiment, a pin hole 1141a through which the first pin 140 passes may be provided in the bottom portion 1141 of the first pulley fixing portion 114. In an embodiment, the pin hole 1141a may be disposed at the center of the bottom portion 1141.

According to an embodiment, at least one fixing hole 1141b for inserting the fixing protrusion 1613 of the first pulley 161 may be provided in the bottom portion 1141 of the first pulley fixing portion 114. In an embodiment, the arrangement and/or shape of at least one fixing hole 1141b may be designed to correspond to the arrangement and/or shape of the fixing protrusion 1613 of the first pulley 161. For example, at least one fixing hole 1141b may be disposed to be spaced apart by a predetermined interval at a position corresponding to the fixing protrusion 1613 of the first pulley 161 along the circumference of the pin hole 1141a. For example, at least one fixing hole 1141b may extend radially outward from the edge of the pin hole 1141a at a position corresponding to the fixing protrusion 1613 of the first pulley 161.

According to an embodiment, a wire hole 1142a through which the first wire 163 passes may be provided in the side wall 1142 of the first pulley fixing portion 114. The wire hole 1142a may be formed to extend along a predetermined section of the circumference of the side wall 1142 of the first pulley fixing portion 114, but the disclosure is not limited to it.

According to an embodiment, a second pulley fixing portion 123 for fixing the second pulley 162 may be disposed at one end of the temple member 120 (e.g., one end of the temple member 120 adjacent to the hinge housing 131). Since the structure, shape, and function of the second pulley fixing portion 123 are substantially the same as those of the first pulley fixing portion 114 described above, a detailed description of the second pulley fixing portion 123 may be replaced with a description of the first pulley fixing portion 114.

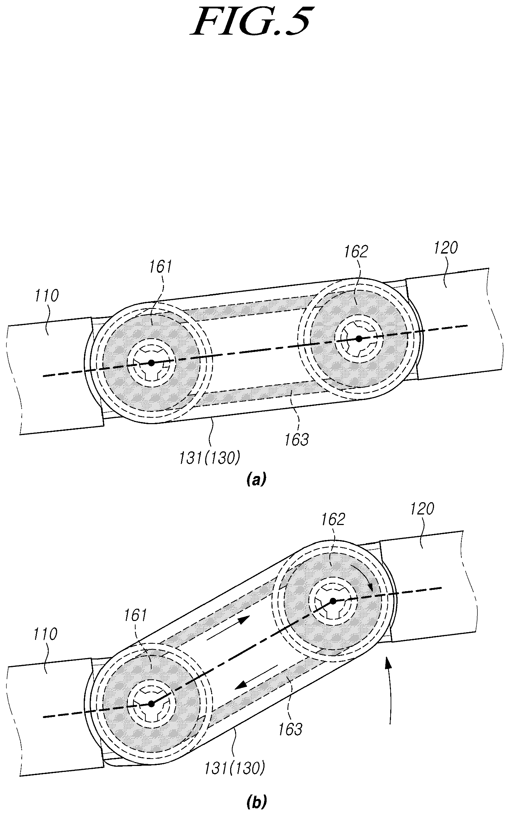

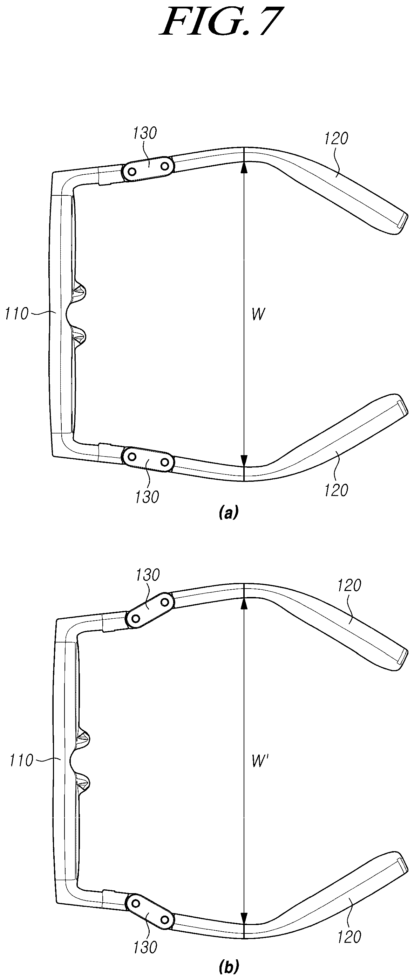

FIG. 5 is a schematic view illustrating an operation relationship between a hinge and a temple member to maintain a constant angle formed by a straight portion of the temple member with respect to a body portion when adjusting the width between the temple members in a wearable electronic device according to an embodiment. FIG. 6 is a schematic view illustrating an operation relationship between a hinge and a temple member to maintain a constant angle formed by a straight portion of the temple member with respect to a body portion when adjusting the width between the temple members in a wearable electronic device according to an embodiment. FIG. 7 is a plan view illustrating a wearable electronic device showing a state before and after adjusting the width between temple members in the wearable electronic device according to an embodiment.

Specifically, FIG. 5(a) is a view schematically illustrating the body portion 110, the temple member 120, and the hinge 130 in a state in which external force is not applied to the wearable electronic device 100, and FIG. 5(b) is a view schematically illustrating that the temple member 120 and the hinge 130 rotate with respect to the body portion 110 in a state in which external force is applied to the wearable electronic device 100.

Specifically, FIG. 6(a) is a view schematically illustrating the body portion 110, the temple member 120, and the hinge 130 corresponding to FIG. 5(a), and FIG. 6(b) is a view schematically illustrating the body portion 110, the temple member 120, and the hinge 130 corresponding to FIG. 5(b).

Referring to FIGS. 5 and 6, the operation of the hinge 130 is described. When an external force is applied to the hinge housing 131, the hinge housing 131 rotates at a predetermined angle θ in an outer direction (e.g., counterclockwise direction) of the wearable electronic device 100 around the first rotation axis (e.g., the rotation axis defined by the first pin 140) that pass through the first pulley 161 fixed to the body portion 110. In this case, a portion of the wire 163 wound around the second pulley 162 is released from point B to point B', and the wire 163 rotates clockwise along the first pulley 161 and the second pulley 162. Further, as the wire 163 rotates clockwise, a portion of the wire 163 is wound along the first pulley 161 from point A' to point A, as illustrated in FIG. 6(b). Since the distance (or the inter-axis distance) between the first pulley 161 and the second pulley 162 is constant, the distance between the points A and B and the distance between the points A' and B' are substantially the same.

The second pulley 162 rotates together with the temple member 120 in the inner direction (e.g., counterclockwise direction) of the wearable electronic device 100 at an angle substantially the same as the predetermined angle θ by friction due to the rotation of the wire 163. As a result, as the temple member 120 rotates at the same angle in a direction opposite to the rotation direction of the hinge 130, the temple member 120 maintains the initial angle formed with respect to the body 110 or the connection 113 before and after the rotation, so that the angle between the temple members 120 may be maintained constant. Referring to FIG. 7, the user may adjust the width W between the temple members 120 according to the size of the user's body by rotating the temple members 120 (or the hinges 130) of the wearable electronic device 100 outward. Specifically, as illustrated in FIG. 7(a), the user may increase the width W' between the temple members 120 according to his/her body size (e.g., head size) by rotating the temple members 120 of the wearable electronic device 100 outward as illustrated in FIG. 7(b) in an initial state in which external force is not applied to the temple members 120 of the wearable electronic device 100. In this case, even when the width W' between the temple members 120 increases, the temple members 120 may maintain the same angle as in the initial state between them as illustrated in FIG. 7(a) and 7(b) by the mutual operation of the hinge 130 and the temple member 120 described above. In this case, the user may be provided with the same wearing comfort regardless of the change in width W of the wearable electronic device 100.

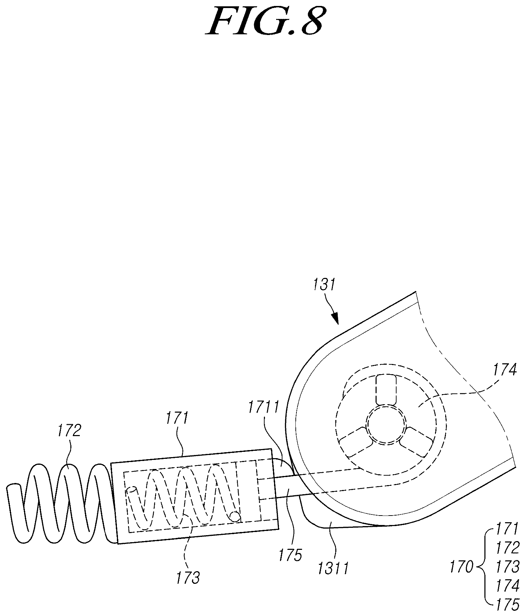

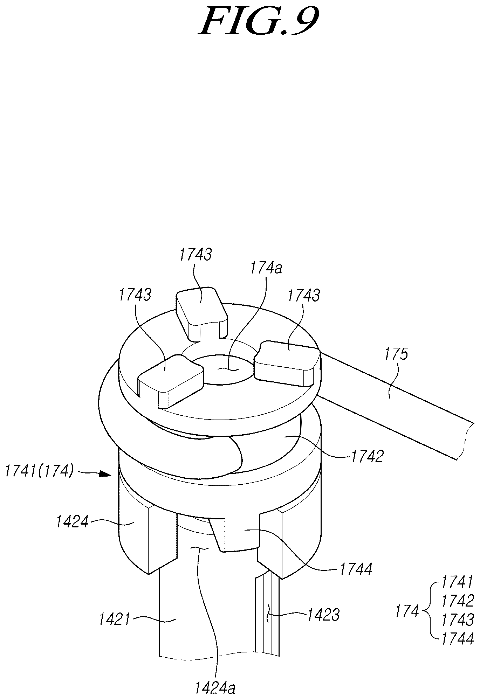

FIG. 8 is a schematic view illustrating a rotational force maintaining part for maintaining a rotational force of a hinge acting on a body portion in a wearable electronic device according to an embodiment. FIG. 9 is a view illustrating a stopper structure limiting a rotation angle of a hinge housing according to an embodiment.

Referring to FIGS. 3, 8, and 9, in an embodiment, the wearable electronic device 100 may include a rotational force maintaining part 170 elastically connecting the body portion 110 and the hinge housing 131 of the hinge 130.

According to an embodiment, the rotational force maintaining part 170 may include a spring housing 171, a first spring 172, a second spring 173, a third pulley 174, and a second wire 175.

According to an embodiment, the spring housing 171 may be provided to have a substantially rectangular parallelepiped shape. In an embodiment, the spring housing 171 may be movably disposed inside the connection portion 113 of the body portion 110.

According to an embodiment, guide protrusions 1712, may be disposed to protrude on the upper and lower surfaces, respectively, of the spring housing 171. In an embodiment, the guide protrusion 1712 may extend along the length direction of the spring housing 171.

According to an embodiment, the first spring 172 may be disposed inside the connection portion 113 of the body portion 110, and although not specifically illustrated, may be connected to the connection portion 113 of the body portion 110 and one end of the spring housing 171. In this case, the spring housing 171 may be elastically connected to the body portion 110 by the first spring 172. Accordingly, when the hinge housing 131 rotates, the spring housing 171 may be drawn in/out of the connection portion 113 of the body portion 110 by the elastic force of the first spring 172. In an embodiment, the first spring 172 may be configured to apply a compressive force to the spring housing 171. In this case, the first spring 172 may be referred to as a compression spring.

According to an embodiment, the second spring 173 may be disposed inside the spring housing 171 through an opening 1713 provided in one surface (e.g., a surface facing the -x-axis direction) of the spring housing 171. In an embodiment, the second spring 173 may be configured to apply a tensile force to the second wire 175. In this case, the second spring 173 may be referred to as a tension spring.

According to an embodiment, the third pulley 174 may be disposed to be fixed to the hinge housing 131. For example, although not specifically illustrated, the third pulley 174 may be fixed to the hinge housing 131 by being mounted on the third pulley fixing portion provided on the inner surface of the hinge housing 131 adjacent to the pin hole 131a of the hinge housing 131.

According to an embodiment, the third pulley 174 may include a third pulley body 1741 extending in the vertical direction, and a wire recess 1742 recessed radially inward from the outer circumference of the third pulley body 1741.

According to an embodiment, the third pulley 174 may include a pin hole 174a provided to pass through the center of the third pulley body 1741. The spring housing 171 and the hinge 130 may interlock with each other as the first pin 140 is inserted into the pin hole 174a.

According to an embodiment, the third pulley 174 may include at least one fixing protrusion 1743 protruding from the upper surface of the third pulley 174. In an embodiment, the fixing protrusion 1743 may extend from the edge of the pin hole 174a to the upper edge of the third pulley 174, but the disclosure is not limited thereto. In an embodiment, at least one fixing protrusion 1743 may be disposed to be spaced apart by a predetermined interval along the circumference of the pin hole 174a on the upper surface of the third pulley 174.

According to an embodiment, the third pulley 174 may include a stop protrusion 1744 protruding from the lower surface of the third pulley 174. In an embodiment, the stop protrusion 1744 may be disposed at a lower edge of the third pulley 174, but the disclosure is not limited thereto.

Referring to FIGS. 3 and 9, in an embodiment, a stop rib 1424 may be disposed on an upper portion of the first lower pin 142 of the first pin 140. In an embodiment, the stop rib 1424 may extend along a predetermined section of the upper circumference of the first lower pin 142. In an embodiment, the stop rib 1424 may include an opening 1424a in which the stop protrusion 1744 of the third pulley 174 is inserted. In an embodiment, the opening 1424a may refer to a space area provided between one end and the other end of the stop rib 1424. In this case, the stop protrusion 1744 of the third pulley 174 inserted into the opening 1424a may be limitedly rotated in the opening 1424a when the hinge housing 131 is rotated, thereby limiting the rotation angle of the hinge housing 131.

According to an embodiment, the second wire 175 may be disposed to surround at least a portion of the third pulley 174. In an embodiment, one end of the second wire 175 may be connected to the second spring 173, and the other end thereof may be connected to the third pulley 174.

According to an embodiment, a spring receiving portion 115 in which the spring housing 171 is received may be provided at an end of the connection portion 113 of the body portion 110. In an embodiment, the spring receiving portion 115 may be positioned in an upper end of the body portion 110. In an embodiment, a guide recess 1151 having a shape corresponding to the guide protrusion 1712 of the spring housing 171 may be provided in the inner surface of the spring receiving portion 115. In this case, the spring housing 171 positioned inside the spring receiving portion 115 may slide inside and outside the connection portion 113 of the body portion 110 along the guide recess 1151 when the hinge housing 131 rotates.

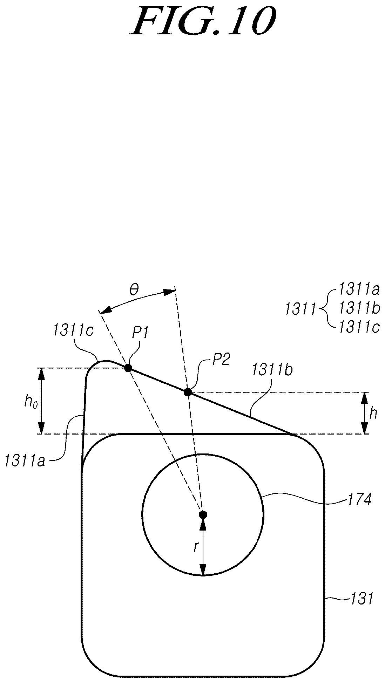

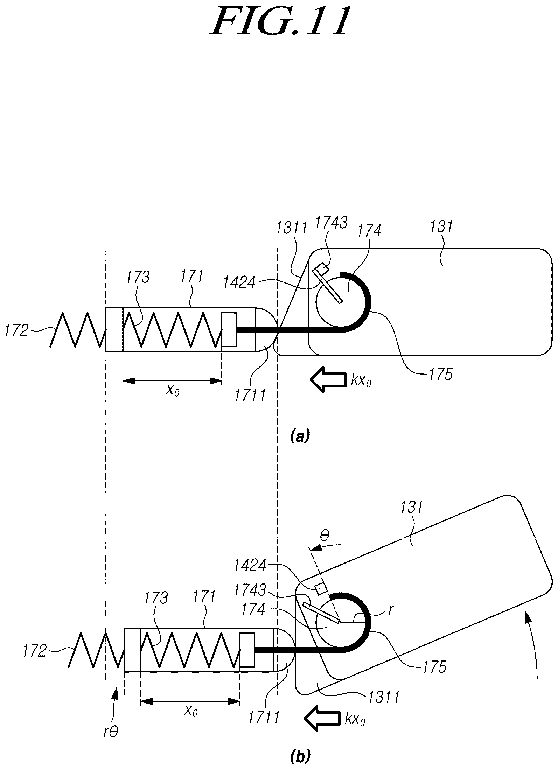

FIG. 10 is a schematic view illustrating the shape of a rotation cam of a hinge housing according to an embodiment. FIG. 11 is a schematic view illustrating the operation of a rotational force maintaining part according to an embodiment.

Referring to FIG. 10, in an embodiment, the rotation cam 1311 of the hinge housing 131 may include a first surface 1311a facing the inside of the wearable electronic device 100, a second surface 1311b facing the outside of the wearable electronic device 100, and a third surface 1311c connecting the first surface 1311a and the second surface 1311b. In an embodiment, the first surface 1311a may be provided to be substantially parallel to one side surface of the hinge housing 131. In an embodiment, the second surface 1311b may be provided to have a predetermined inclination with respect to the other side surface of the hinge housing 131 when the hinge housing 131 is viewed from above. In an embodiment, the third surface 1311c may be provided as a curved surface having a predetermined curvature.

According to an embodiment, the fixed cam 1711 of the spring housing 171 may be disposed to contact the second surface 1311b or the third surface 1311c of the rotation cam 1311 of the hinge housing 131 in an initial state. In this case, the peak area of the second surface 1311c positioned at the end of the rotation cam 1311 functions as a kind of stop jaw, thereby preventing internal rotation of the hinge housing 131 to some degree.

Referring to FIG. 11(a), in the initial state in which external force is not applied to the wearable electronic device 100, a rotational torque by the second wire 175 connected to the second spring 173 acts on the hinge housing 131, and a tension (or a clamping force) acts in the inner direction of the temple member 120 by the rotational torque. In this case, when the user wears the wearable electronic device 100, the temple members 120 may be seated on the user's head. In this case, the magnitude $kx0$ of the tensile force of the second spring 173 acting on the second wire 175 is proportional to the initial tensile length $x0$ of the second spring 173.

Referring to FIG. 11(b), the rotation cam 1311 of the hinge housing 131 rotates together with the hinge housing 131 in a state in which the hinge 130 rotates with respect to the body portion 110 as external force is applied to the wearable electronic device 100. In this case, the contact point between the rotation cam 1311 of the hinge housing 131 and the fixed cam 1711 of the spring housing 171 moves along the third surface 1311c or the second surface 1311b in response to the rotation angle θ of the hinge housing 131. Specifically, the contact point between the rotation cam 1311 of the hinge housing 131 and the fixed cam 1711 of the spring housing 171 may move along the third surface 1311c or the second surface 1311b in response to the rotation angle of the hinge housing 131. In this case, the spring housing 171 moves by the extension length $r\theta$ of the first spring 172 by the compression force of the first spring 172, so that even when the hinge housing 131 rotates, the tensile length of the second spring 173 does not change and maintains the initial tensile length $x0$, thereby providing the same tension (or clamping force) to the user.

As described above, in order to provide the same tension to the temple members 120, the rotation cam 1311 may be configured to meet the following equation.

$$[\text{Equation 1}]$$
$$h = h0 - r\theta$$

(where, $h0$ is the distance from the hinge housing 131 to the contact point P1 of the fixed cam (fixed cam 1711 of FIG. 8) in the initial state, $h$ is the distance from the hinge housing 131 to the contact point P2 of the fixed cam (fixed cam 1711 of FIG. 8) in the rotating state, $r$ is the radius of the third pulley 174, and θ is the rotation angle of the third pulley 174 in the rotating state)

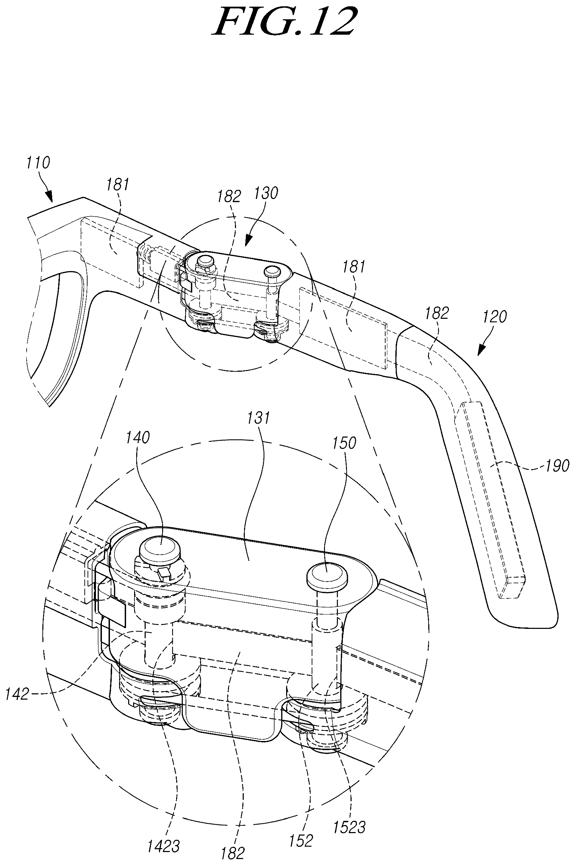

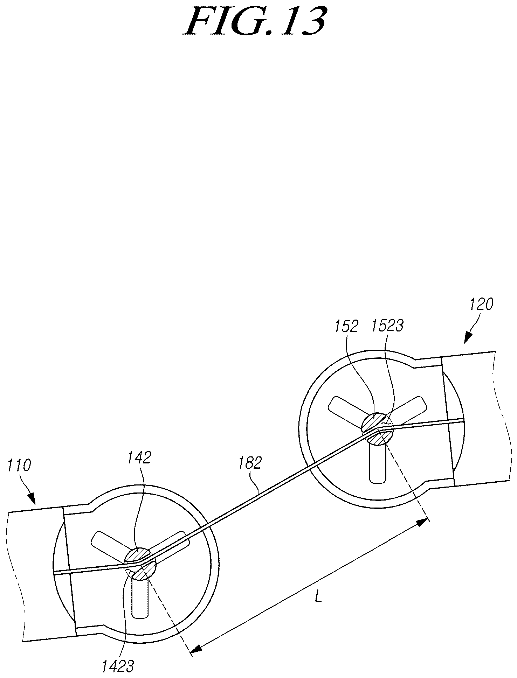

FIG. 12 is a perspective view illustrating a partial internal configuration of a wearable electronic device according to an embodiment. FIG. 13 is a cross-section taken along line A-A' of FIG. 2.

Referring to FIGS. 12 and 13, in an embodiment, the wearable electronic device 100 may include a plurality of electrical components therein. For example, at least one printed circuit board (PCB) 181, at least one FPCB 182, and a battery 190 may be disposed inside the wearable electronic device 100.

According to an embodiment, at least one PCB 181 may be disposed inside the body portion 110 and/or the temple member 120. In an embodiment, the battery 190 may be disposed inside the temple member 120.

According to an embodiment, at least one FPCB 182 may be disposed to electrically connect the PCB 181 to the battery 190. In an embodiment, the FPCB 182 may be disposed to pass through the hinge 130 to electrically connect the electrical component provided inside the body portion 110 and the electrical component provided inside the temple member 120. For example, the FPCB 182 may be disposed to pass through the axial center of each of the pins 140 and 150 through the first wire hole 1423 provided in the first pin 140 and the second wire hole 1523 provided in the second pin 150.

When the angle of the hinge 130 with respect to the body portion 110 changes according to the rotation of the hinge housing 131, the distance L between the axes of the first pin 140 and the second pin 150 is maintained constant, so that the FPCB 182 passing through the wire hole 1423 and 1523 of each pin 140 and 150 also maintains the same wire length despite the rotation of the hinge 130. Accordingly, the durability of FPCB 182 may be enhanced, and the space utilization within the wearable electronic device 100 may be increased, thereby delivering a smooth augmented reality image to the user.

A wearable electronic device 100 according to an embodiment of the disclosure may comprise a body portion 110 having a glass mounting portion 112, a temple member 120, and a hinge 130 rotatably connecting the temple member 120 to the body portion 110. The hinge 130 may include a hinge housing 131 rotatably connected to the body portion 110 through a first shaft 140 and rotatably connected to the temple member 120 through a second shaft 150. The hinge 130 may include a first pulley 161 fixed to the body portion 110 and allowing the first shaft 140 to pass therethrough. The hinge 130 may include a second pulley 162 fixed to the temple member 120 and allowing the second shaft 150 to pass therethrough. The hinge 130 may include a first wire 163 surrounding at least a portion of each of the first pulley 161 and the second pulley 162.

According to an embodiment, when the hinge housing 131 rotates about the first shaft 140 by a first angle, the second pulley 162 may be disposed to rotate in a direction opposite to the rotation direction of the hinge housing 131 by the first angle by the first wire 163.

According to an embodiment, the wearable electronic device 100 may comprise a rotational force maintaining part 170 configured to maintain a rotational force of the hinge 130 relative to the body portion 110.

According to an embodiment, the rotational force maintaining part 170 may include a first spring 172 connected to the body portion 110. The rotational force maintaining part 170 may include a spring housing 171 connected to the first spring 172 and configured to be movable into and out of the body portion 110. The rotational force maintaining part 170 may include a second spring 173 received inside the spring housing 171. The rotational force maintaining part 170 may include a second wire 175 having one end fixed to the second spring 173. The rotational force maintaining part 170 may include a third pulley 174 allowing the first shaft 140 to pass therethrough and at least partially surrounded by the second wire 175.

According to an embodiment, the hinge housing 131 may include a rotation cam 1311 protruding from a surface adjacent to the body portion 110. The spring housing 171 may include a fixed cam 1711 configured to contact the rotation cam 1311.

According to an embodiment, the rotation cam 1311 may include a first surface 1311a facing an inner space of the wearable electronic device defined by the body portion 110 and the temple member 120, a second surface 1311b facing an outer side of the inner space, and a third surface 1311c connecting the first surface 1311a and the second surface 1311b and having a predetermined curvature.

According to an embodiment, the fixed cam 1711 may be disposed to contact the second surface 1311b or the third surface 1311c.

According to an embodiment, a contact point of the rotation cam 1311 with the fixed cam 1711 may move along the second surface 1311b in a direction away from the third surface 1311c of the rotation cam 1311 when the hinge housing 131 rotates outward from the inner space. The first spring 172 may be configured to stretch according to a winding length of the second wire 175 on the third pulley 174 increased by the rotation of the hinge housing 131.

According to an embodiment, the third pulley 174 may include a stop protrusion 1744 extending downward from the third pulley 174.

According to an embodiment, the first shaft 140 may include a stop rib 1424 extending along a circumference of the first shaft 140. The stop rib 1424 may define an empty space 1424a between two opposite ends of the stop rib 1424 along the circumference of the first shaft 140. The stop protrusion 1744 of the third pulley 174 may be disposed to be received in the empty space 1424a.

According to an embodiment, the wearable electronic device 100 may comprise an FPCB 182 disposed inside the body portion 110 and the temple member 120. Each of the first shaft 140 and the second shaft 150 may include a wire hole 1423, 1523 configured to allow the FPCB 182 to pass therethrough.

A wearable electronic device 100 according to an embodiment of the disclosure may comprise a body portion 110 having a glass mounting portion 112, a temple member 120, and a hinge 130 rotatably connecting the temple member 120 to the body portion 110. The hinge 130 may include a hinge housing 131 rotatably connected to the body portion 110 through a first shaft 140. The wearable electronic device 100 may comprise a first spring 172 connected to the body portion 110. The wearable electronic device 100 may comprise a spring housing 171 connected to the first spring 172 and configured to be movable into and out of the body portion 110. The wearable electronic device 100 may comprise a second spring 173 received inside the spring housing 171. The wearable electronic device 100 may comprise a second wire 175 having one end fixed to the second spring 173. The wearable electronic device 100 may comprise a third pulley 174 allowing the first shaft 140 to pass therethrough and at least partially surrounded by the second wire 175.

According to an embodiment, the hinge housing 131 may include a rotation cam 1311 protruding from a surface adjacent to the body portion 110. The spring housing 171 may include a fixed cam 1711 configured to contact the rotation cam 1311.

According to an embodiment, the rotation cam 1311 may include a first surface 1311a facing an inner space of the wearable electronic device defined by the body portion 110 and the temple member 120, a second surface 1311b facing an outer side of the inner space, and a third surface 1311c connecting the first surface 1311a and the second surface 1311b and having a predetermined curvature.

According to an embodiment, the hinge 130 may include a first pulley 161 fixed to the body portion 110 and allowing the first shaft 140 to pass therethrough. The hinge 130 may include a second pulley 162 fixed to the temple member 120 and allowing the second shaft 150 to pass therethrough. The hinge 130 may include a first wire 163 surrounding at least a portion of the first pulley 161 and the second pulley 162. When the hinge housing 131 rotates about the first shaft 140 by a first angle, the second pulley 162 may rotate in a direction opposite to the rotation direction of the hinge housing 131 by the first angle by the first wire 163.

The terms as used herein are provided merely to describe some embodiments thereof, but are not intended to limit the disclosure. As used herein, the singular forms "a," "an," and "the" are intended to include the plural forms as well, unless the context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, the terms "first" and "second" may modify various components regardless of importance and/or order and are used to distinguish a component from another without limiting the components.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation.

Meanwhile, the terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments, but should rather be appreciated as covering all various modifications, equivalents, and/or substitutes of various embodiments.

## Claims

1. A wearable electronic device (100) comprising:

    a body portion (110) having a glass mounting portion (112);
    a temple member (120); and
    a hinge (130) rotatably connecting the temple member (120) to the body portion (110),
    wherein the hinge (130) includes:

        a hinge housing (131) rotatably connected to the body portion (110) through a first shaft (140) and rotatably connected to the temple member (120) through a second shaft (150);
        a first pulley (161) fixed to the body portion (110) and allowing the first shaft (140) to pass therethrough;
        a second pulley (162) fixed to the temple member (120) and allowing the second shaft (150) to pass therethrough; and
        a first wire (163) surrounding at least a portion of each of the first pulley (161) and the second pulley (162).

2. The wearable electronic device of claim 1, wherein when the hinge housing (131) rotates about the first shaft (140) by a first angle, the second pulley (162) rotates in a direction opposite to the rotation direction of the hinge housing (131) by the first angle by the first wire (163).

3. The wearable electronic device of claim 1, further comprising: a rotational force maintaining part (170) configured to maintain a rotational force of the hinge (130) relative to the body portion (110).

4. The wearable electronic device of claim 3, wherein the rotational force maintaining part (170) includes:

    a first spring (172) connected to the body portion (110);
    a spring housing (171) connected to the first spring (172) and configured to be movable into and out of the body portion (110);
    a second spring (173) received inside the spring housing (171);
    a second wire (175) having one end fixed to the second spring (173); and
    a third pulley (174) allowing the first shaft (140) to pass therethrough and at least partially surrounded by the second wire (175).

5. The wearable electronic device of claim 4, wherein the hinge housing (131) includes a rotation cam (1311) protruding from a surface adjacent to the body portion (110), and
wherein the spring housing (171) includes a fixed cam (1711) configured to contact the rotation cam (1311).

6. The wearable electronic device of claim 5, wherein the rotation cam (1311) includes a first surface (1311a) facing an inner space of the wearable electronic device defined by the body portion (110) and the temple member (120), a second surface (1311b) facing an outer side of the inner space, and a third surface (1311c) connecting the first surface (1311a) and the second surface (1311b) and having a predetermined curvature.

7. The wearable electronic device of claim 6, wherein the fixed cam (1711) is disposed to contact the second surface (1311b) or the third surface (1311c).

8. The wearable electronic device of claim 6, wherein a contact point of the rotation cam (1311) with the fixed cam (1711) moves along the second surface (1311b) in a direction away from the third surface (1311c) of the rotation cam (1311) when the hinge housing (131) rotates outward from the inner space, and
wherein the first spring (172) is configured to stretch according to a winding length of the second wire (175) on the third pulley (174) increased by the rotation of the hinge housing (131).

9. The wearable electronic device of claim 4, wherein the third pulley (174) includes a stop protrusion (1744) extending downward from the third pulley (174).

10. The wearable electronic device of claim 9, wherein the first shaft (140) includes a stop rib (1424) extending along a circumference of the first shaft (140),

   wherein the stop rib (1424) defines an empty space (1424a) between two opposite ends of the stop rib (1424) along the circumference of the first shaft (140), and
   wherein the stop protrusion (1744) of the third pulley (174) is disposed to be received in the empty space (1424a).

11. The wearable electronic device of claim 1, further comprising: an FPCB (182) disposed inside the body portion (110) and the temple member (120), and wherein each of the first shaft (140) and the second shaft (150) includes a wire hole (1423, 1523) configured to allow the FPCB (182) to pass therethrough.

12. A wearable electronic device (100) comprising:

   a body portion (110) having a glass mounting portion (112);
   a temple member (120); and
   a hinge (130) rotatably connecting the temple member (120) to the body portion (110), and wherein the hinge (130) includes:
   a hinge housing (131) rotatably connected to the body portion (110) through a first shaft (140), and wherein the wearable electronic device (100) further comprises:

      a first spring (172) connected to the body portion (110);
      a spring housing (171) connected to the first spring (172) and configured to be movable into and out of the body portion (110);
      a second spring (173) received inside the spring housing (171);
      a second wire (175) having one end fixed to the second spring (173); and
      a third pulley (174) allowing the first shaft (140) to pass therethrough and at least partially surrounded by the second wire (175).

13. The wearable electronic device of claim 12, wherein the hinge housing (131) includes a rotation cam (1311) protruding from a surface adjacent to the body portion (110), and

wherein the spring housing (171) includes a fixed cam (1711) configured to contact the rotation cam (1311).

14. The wearable electronic device of claim 13, wherein the rotation cam (1311) includes a first surface (1311a) facing an inner space of the wearable electronic device defined by the body portion (110) and the temple member (120), a second surface (1311b) facing an outer side of the inner space, and a third surface (1311c) connecting the first surface (1311a) and the second surface (1311b) and having a predetermined curvature.

15. The wearable electronic device of claim 12, wherein the hinge (130) includes:

   a first pulley (161) fixed to the body portion (110) and allowing the first shaft (140) to pass therethrough;
   a second pulley (162) fixed to the temple member (120) and allowing a second shaft (150) to pass therethrough; and
   a first wire (163) surrounding at least a portion of the first pulley (161) and the second pulley (162), and

wherein when the hinge housing (131) rotates about the first shaft (140) by a first angle, the second pulley (162) rotates in a direction opposite to the rotation direction of the hinge housing (131) by the first angle by the first wire (163).

# FIG.1

# FIG.2

# FIG.3

# FIG.4

# FIG.5

*(a)*

*(b)*

# FIG.6

(a)

(b)

# FIG.7

(a)

(b)

# *FIG.8*

# FIG.9

# FIG.10

# FIG.11

**(a)**

**(b)**

# FIG.12

# FIG.13

## INTERNATIONAL SEARCH REPORT

| International application No. |
| --- |
| **PCT/KR2024/001485** |

| A. | CLASSIFICATION OF SUBJECT MATTER |
| --- | --- |

**G02B 27/01**(2006.01)i; **G02F 1/163**(2006.01)i; **G02C 5/00**(2006.01)i; **G02C 5/22**(2006.01)i; **G06F 1/16**(2006.01)i

According to International Patent Classification (IPC) or to both national classification and IPC

| B. | FIELDS SEARCHED |
| --- | --- |

Minimum documentation searched (classification system followed by classification symbols)

G02B 27/01(2006.01); F16C 11/04(2006.01); G02C 5/22(2006.01); G02C 9/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 증강 현실(augmented reality), 안경(glasses), 다리(temple), 힌지(hinge), 와이어 (wire), 스프링(spring)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2022-0163740 A (SAMSUNG ELECTRONICS CO., LTD.) 12 December 2022 (2022-12-12) See paragraphs [0041]-[0073] and [0097]-[0106]; claims 1-2; and figures 2-6c. | 1-2,11 |
| Y | | 3 |
| A | | 4-10,12-15 |
| Y | KR 10-2023-0003069 A (VIVO MOBILE COMMUNICATION CO., LTD.) 05 January 2023 (2023-01-05) See paragraphs [0045]-[0055]; claim 1; and figures 1-5. | 3 |
| A | KR 10-1183071 B1 (HANKUK PRECISION CO., LTD.) 20 September 2012 (2012-09-20) See paragraphs [0026]-[0053]; claims 1-5; and figures 1-7. | 1-15 |
| A | US 2022-0326534 A1 (MICROSOFT TECHNOLOGY LICENSING, LLC.) 13 October 2022 (2022-10-13) See paragraphs [0017]-[0048]; claims 1-10 and 12-20; and figures 1-13. | 1-15 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 April 2024** | **01 May 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/001485** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2011-086177 A1 (GICI LABS LLP.) 21 July 2011 (2011-07-21)<br>See pages 15-20; claims 1-17; and figures 1-26. | 1-15 |

Form PCT/ISA/210 (second sheet) (July 2022)

INTERNATIONAL SEARCH REPORT
Information on patent family members

International application No.

**PCT/KR2024/001485**

| Patent document cited in search report | | | Publication date (day/month/year) | Patent family member(s) | | | Publication date (day/month/year) |
|---|---|---|---|---|---|---|---|
| KR | 10-2022-0163740 | A | 12 December 2022 | EP | 4276515 | A1 | 15 November 2023 |
| | | | | US | 2022-0390752 | A1 | 08 December 2022 |
| | | | | WO | 2022-255613 | A1 | 08 December 2022 |
| KR | 10-2023-0003069 | A | 05 January 2023 | CN | 111539898 | A | 14 August 2020 |
| | | | | CN | 111539898 | B | 01 August 2023 |
| | | | | CN | 111556614 | A | 18 August 2020 |
| | | | | CN | 111556614 | B | 01 June 2021 |
| | | | | CN | 111583348 | A | 25 August 2020 |
| | | | | CN | 111596469 | A | 28 August 2020 |
| | | | | CN | 111596469 | B | 22 April 2022 |
| | | | | CN | 113629246 | A | 09 November 2021 |
| | | | | CN | 113630861 | A | 09 November 2021 |
| | | | | CN | 113630861 | B | 07 April 2023 |
| | | | | CN | 113630881 | A | 09 November 2021 |
| | | | | EP | 4148486 | A1 | 15 March 2023 |
| | | | | EP | 4148486 | A4 | 15 November 2023 |
| | | | | EP | 4148675 | A1 | 15 March 2023 |
| | | | | EP | 4149178 | A1 | 15 March 2023 |
| | | | | EP | 4149191 | A1 | 15 March 2023 |
| | | | | JP | 2023-524318 | A | 09 June 2023 |
| | | | | JP | 2023-524773 | A | 13 June 2023 |
| | | | | JP | 2023-524869 | A | 13 June 2023 |
| | | | | JP | 2023-526777 | A | 23 June 2023 |
| | | | | KR | 10-2023-0006580 | A | 10 January 2023 |
| | | | | KR | 10-2023-0007489 | A | 12 January 2023 |
| | | | | US | 2022-0351340 | A1 | 03 November 2022 |
| | | | | US | 2023-0063509 | A1 | 02 March 2023 |
| | | | | US | 2023-0072069 | A1 | 09 March 2023 |
| | | | | US | 2023-0072085 | A1 | 09 March 2023 |
| | | | | US | 2023-0077907 | A1 | 16 March 2023 |
| | | | | US | 2023-0145294 | A1 | 11 May 2023 |
| | | | | US | 2023-0163308 | A1 | 25 May 2023 |
| | | | | WO | 2021-227151 | A1 | 18 November 2021 |
| | | | | WO | 2021-227740 | A1 | 18 November 2021 |
| | | | | WO | 2021-227832 | A1 | 18 November 2021 |
| | | | | WO | 2021-227917 | A1 | 18 November 2021 |
| | | | | WO | 2021-227919 | A1 | 18 November 2021 |
| | | | | WO | 2021-227922 | A1 | 18 November 2021 |
| | | | | WO | 2021-227929 | A1 | 18 November 2021 |
| | | | | WO | 2021-227985 | A1 | 18 November 2021 |
| KR | 10-1183071 | B1 | 20 September 2012 | None | | | |
| US | 2022-0326534 | A1 | 13 October 2022 | EP | 4320474 | A1 | 14 February 2024 |
| | | | | US | 11480802 | B1 | 25 October 2022 |
| | | | | WO | 2022-216448 | A1 | 13 October 2022 |
| WO | 2011-086177 | A1 | 21 July 2011 | CN | 102782566 | A | 14 November 2012 |
| | | | | US | 2013-0141692 | A1 | 06 June 2013 |
| | | | | US | 9075247 | B2 | 07 July 2015 |

Form PCT/ISA/210 (patent family annex) (July 2022)